(19) Europäisches Patentamt
European Patent Office
Office européen des brevets

(11) Publication number: **0 056 886**
**A1**

(12) # EUROPEAN PATENT APPLICATION

(21) Application number: 81300302.7

(22) Date of filing: 23.01.81

(51) Int. Cl.³: G 06 F 9/44
G 06 F 3/023

(43) Date of publication of application: 04.08.82 Bulletin 82/31

(84) Designated Contracting States: DE FR GB IT

(71) Applicant: International Business Machines Corporation

Armonk, N.Y. 10504(US)

(72) Inventor: Pullin, David John
1 Vanburgh Way
Chardlers Ford Eastleigh Hampshire(GB)

(74) Representative: Appleton, John Edward
IBM United Kingdom Patent Operations Hursley Park
Winchester Hants, SO21 2JN(GB)

(54) **Data processing system with an interactive display.**

(57) A data processing system having interactive display terminals each with program function keys at which users enter data to be processed into field positions in maps displayed at the terminal and associated with particular application programs and in which application programs are run under the control of an operating system and having means in the operating system to allow a designer of maps for an application program to create a tutorial screen at the same time a map is defined so that when a data entry user requires help in interpreting a defined map the operating system automatically displays the tutorial screen associated with the map in response to an input from the associated program function key.

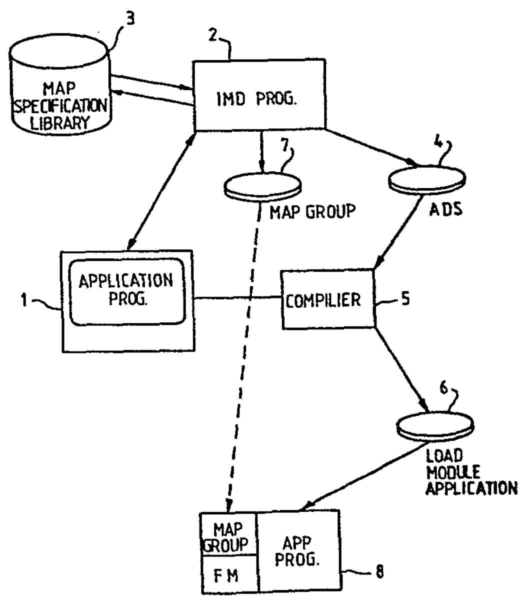


EP 0 056 886 A1

Croydon Printing Company Ltd.

TITLE MODIFIED
see front page

0056886



DATA PROCESSING SYSTEM

This invention relates to data processing systems and particularly to such systems which include a central processing unit and a plurality of input-output (I/O) terminal units arranged to communicate interactively with the processing unit.

A digital data processing system such as one based upon an IBM 8100 System (IBM is a Registered Trade Mark) is used for many different applications. A user of such a system has to design an application program for each particular application. Users may not be skilled in data processing techniques and it is therefore desirable to make the designing of an application program and its use as simple as possible.

Many aids to help an application designer are available. Distributed Presentation Services (DPS) has been designed to aid the presentation of information to a user at an I/O terminal. (DPS is described in DPPX Distributed Presentation Services Version 2 General Information Manual GC33-0122 published by International Business Machines Corporation.)

Reference should also be made to the IBM Systems Journal Vol Eighteen No 4 1979 in which a description of an operating system for distributed processing appears.

DPS provides support for the presentation needs of application programs. This support has two aspects. The first is the provision of an easy way of controlling the formatting of data on display screens and printers, and

isolating formatting from the logic of the program. The second is the provision of an architected interface for passing of information between the display device and the program. Because of these two aspects, DPS can offer a data processing installation a number of advantages:

Simpler programming because formatting is separated from the application program - there is no need for any formatting information in the program, and so coding of device dependent data streams is eliminated.

Better use of terminals because DPS provides a high level interface for application programs to access terminal features.

More usable applications because screen formats are created interactively and consequently can be adjusted until the most usable format is found.

To understand the need for DPS, it is necessary to consider the task of writing an online application program. In such a task there are two distinct types of problem. The first is that of logic. This, typically, consists of accessing the data from a data base, doing any necessary computations and, perhaps, updating the data base with information received from the terminal operator. The second is the problem of communicating between the application program and the terminal user. This consists of laying out the data on the screen in a readable manner and managing the interactions between the terminal user and the program. This second type of problem is the presentation problem. If an application designer is faced with handling both problems at one time, they interact, and both logic and presentation

become harder to manage. DPS isolates presentation and logic to their mutual advantage.

Consideration of presentation shows that it has two aspects. The first is the actual formatting of displayed data. The second is the handling of the interactions between the terminal and the program.

Formatting of displayed data can be almost totally isolated from the application program. It is irrelevant to the logic of the program whether a particular piece of information appears at the top, bottom, or middle of a screen; or whether, for example, a customer name appears to the left or right of the customer code number. Accordingly, DPS tackles formatting by isolating formatting information in maps.

Maps are software tables that hold information about the format in which data should appear on a screen or other display device such as a printer. They are kept separate from the program, and DPS manages data formatting in response to program requests specifying a map. When the data is transmitted by the program, it is merged by DPS with formatting information in the map and the correct format is presented on the screen or the printed page. To ensure a match between the data and the map, the map will usually be created before the source program is written, and during creation names are associated with the fields on the screen that will hold the application program data. The map is then processed to produce the names in a form that can be copied into the application program and used to define a data area for input/output.

The isolation of formatting data from program logic has other advantages as well as simplifying the process of writing applications. Maps can contain formatting information for many devices. Object maps can be generated automatically for each device used in the installation. At run time DPS will automatically load the correct object map for the device. Programs that use a map can communicate with any type of device that is specified in the map. Thus programs can be largely device independent. In addition one map can be used by many source programs.

Maps can also contain column headings and similar data that enable the terminal user to interpret information transmitted by the program. Such headings are, typically, irrelevant to the program itself and their removal into the map reduces the size and complexity of a program. For more sophisticated applications, processing functions can be associated with maps rather than the program so that, for example, input data can be validated before it is passed to the application program. All these possibilities are exploited by DPS. Furthermore, DPS provides a user-oriented method of producing maps, the maps being created interactively on a screen. This enables the results to be seen as the map is created and removes the need for the programmer to code and learn macro instructions for creating maps. In addition online tutorial information is available to help the user make the best use of the product.

Tutorial information is provided in the form of a number of pages organised in a hierarchical tree structure. Each map or screen panel is associated with one of the tutorial pages. This page may be a general information page or a more detailed information page depending upon the complexity or depth of the associated panel.

When a user is presented with a map and decides that tutorial information is needed, then a Help key is pressed which activates the presentation of the tutorial information. If the information presented is considered either too general or too detailed then the user may command the system to move down or up the particular branch of the tree structure and have presented more or less detailed information. The system is organised so that some pages of the tutorial point to "sister" information pages as well as "daughter". Thus if a user so requires the sister branch can be presented and its relevant branch pages up or down reviewed.

The presentation of tutorial information to an application designer is obviously a very useful tool and enhances the designer's productivity.

However, this tutorial information only relates to the use of the DPS and does not provide a help to the user of the designer's application.

Currently for a designer to provide tutorial or helpful comment information in an application it is necessary for the designer to design a series of routines that will be called every time the user needs help. These routines, because they are extra to and must not degrade the actual application, are complex and tedious to design.

It is therefore an object of the invention to provide a data processing system which has the capability of letting an application designer provide with an application tutorial or explanation information that can be retrieved automatically.

According to the invention there is provided a data processing system including at least one interactive display terminal having program function keys each associated with particular functions at which users enter data to be processed into field positions in maps displayed at the terminal and associated with particular application programs and in which application programs are run under the control of an operating system characterised in that means are provided in the operating system to allow a designer of maps for an application program to create a tutorial screen at the same time a map is defined so that when a data entry user requires help in interpreting a defined map the operating system automatically displays the tutorial screen associated with the map in response to an input from the associated program function key.

In order that the invention may be fully understood a preferred embodiment thereof will now be described with reference to the accompanying drawing in which:

The drawing is a diagram illustrating the operation of an interactive map definition system.

The preferred embodiment of the invention may be implemented in the Distributed Presentation Services System mentioned above. A Logi Overview of the System is found in DPPX Distributed Presentation Services (DPPX/DPS) (LY33-6036-0) published by International Business Machines Corporation.

Referring now more particularly to the drawing. An application designer using the interactive map definition system communicates through an I/O device, usually

incorporating an input keyboard and a display screen. This is shown schematically at 1. The I/O device is connected to a data processing system such as an IBM 8100 which includes disc stores shown schematically in Figure 1.

The interactive map definition (IMD) system 2 controls the operation of the data processing system while the application designer is using the system to define maps. The IMD system stores maps defined by the application designer in a map specification library 3 held on a disc file. The application data structure as defined by the application designer is held on a disk store 4.

The designer initially uses IMD to create maps this is followed by the creation of an application program in source code form which is compiled by the source code language compiler 5 and stored on a disk store 6 as a load module application.

The map specification library 3 contains the map definitions for several applications. When the definition of the maps for an application is complete a mapgroup load module is generated by IMD and placed in a disk store 7. (The load module form of the mapgroup differs from the MSL form in that it is optimised for efficient interpretation, rather than for efficient updating.) When the operating system loads the application program on behalf of the user it also makes available the mapgroup load module and the Format Management program (FM) (part of DPS). The format management program accesses maps, the data structure and control information to generate the required output at the user's I/O device and also interprets the user's input and transforms it to a form usable by the application program.

While the application designer is using the IMD system, use can be made of a tutorial system to help the designer understand and use the system. The present invention provides the designer with the ability to provide a tutorial for the users of the application program.

Two portions of the IMD system that are most relevant to the present invention are the Map Editor and Map Group Editor.

The Map Editor is used to create and update map specifications. The map editor provides frames for the user to supply three types of information about the map being defined:

1. Map characteristics information, such as position, size, and device type.

2. Field information, such as length, position, and field attributes.

3. Application data structure information, such as names for variable fields in the map.

To enable the application designer to enter the necessary information in a simple manner, the map editor presents a series of frames for input, some of which allow the use of editing commands.

The map editor performs various checks to ensure that the designer's input in each frame is valid and compatible with other information for the map and mapgroup. Valid input is then used to create records that describe the map on the

map specification library (MSL). Three types of records are created:

1. Specification characteristics records.

2. Presentation field records.

3. Application data structure records.

These records are used as input to a generator subprocess.

The map editor is invoked when an option is specified in an initial selection menu. Control passes initially to a member specification routine of the map editor, so that the map name, mapgroup name, and device can be established.

The map editor passes its requests for access to the Map Specification Library (MSL) and to a data base services subcomponent of IMD. The requests are issued as macro instructions. Requests to display data on the terminal device are passed to the display services subcomponent. Interrupt keys are also processed by display services.

The map editor may also use the services of the following IMD subcomponents during its execution:

- Command parser for parsing IMD editing commands.
- Message handler to generate messages if any errors arise during map definition.

- General services for building lists of devices supported by the map from the MSL records.

Control is passed between map editor steps by the process dispatcher.

The map editor is described in more detail in the above referenced Diagnosis and Logic Overview pages 51-68 in which the various modules that perform the functions of the map editor are described.

The Mapgroup Editor enables the application designer to define characteristics that apply to all maps in a mapgroup. The mapgroup editor provides frames for the application designer input and processes the input to produce MSL records that describe a mapgroup object.

The mapgroup editor provides frames for the designer to build a mapgroup object. A mapgroup object contains the following types of information:

- Mapgroup characteristics, such as floating area size and printable area size.

- Partition information, if the mapgroup contains maps defined for partitionable devices.

Input supplied in the frames is checked for consistency with floating area size and printable area size, and if valid is used by the mapgroup editor to create mapgroup characteristics records and mapgroup partition definition records.

The mapgroup editor also allows the user to test combinations of maps that are to be used together by creating a simulation of the nominated device.

If the mapgroup editor is chosen from the initial selection menu, control is first passed to a member specification module, via the process dispatcher.

Within mapgroup editor steps, control may be passed to data base services or display services to perform I/O operations to the MSL and the terminal device, and to general services or the message handler to generate device lists or error messages.

The mapgroup editor is described in more detail in the above referenced Diagnosis and Logic Overview pages 84-91.

The data set generator subprocess produces the data sets required by an application program using DPS Format Management.

For each map in the mapgroup, a data set is generated which contains a structure suitable for inclusion in the application program. The name of the data set is that of the map (up to eight characters) optionally preceded by the source catalog name established during the member selection step.

The content of the records depends on the source language chosen during member selection, but the format is fixed blocked records with a logical record length of 80, and block size of 256.

If COBOL is the selected language, the structure generated will be a list of data items declared at level 10 such that the COBOL "COPY" statement may be used on the data set; if assembler is the chosen language, the data set will contain the definition of a macro with a name the same as that of the map.

If any field names are modified to comply with source language rules, a warning message will be produced.

After a map has been defined, records describing the fields and layout of the map exist on the Map Specification Library. A load module version of the map must be created from these records for use by DPS Format Management during the application program execution.

When the application program that is to use the map is compiled, it must include a data structure that corresponds to the map. This structure is built from the application structure records on the MSL.

Both the map load module and the application data structure are created in the generator step of IMD.

There are four steps in the generation process:

1. Member specification - establishes mapgroup name, and the names of the catalogs where the load module and the application data structure (ADS) are to be held, and the source language for the application data structure.

2. Specification selection - establishes what is to be generated (ADS, load module, or both) for which

supported devices, and whether or not the two remaining generator frames are to be shown.

3. Application data structure generation - a data set with the same name as the maps in the mapgroup, containing data items (for COBOL programs) or a macro instruction with the same name as the map (for assembler programs) are generated.

4. Map load module generation - a load module form of the map is generated in a data set with a name derived by appending a two-character device code to the name of the mapgroup. One such data set is generated for each device selected during specification selection.

The implementation of the user tutorial facility to give the application designer the ability to provide tutorial information to the users of application is as follows:-

1. Map Group Editor

Add field:

TUTORIAL GROUP --> ......

This is the name of the Map Group of tutorial pages to be associated with the mapgroup being defined.

2. Map Characteristics

a. Add field:

TUTORIAL PAGE --> ..... HELP PF KEY --> ..... (1-24)

If a name is entered into 'TUTORIAL PAGE' then it is treated as the name of a map in the mapgroup specified by 'TUTORIAL GROUP' that is the tutorial page for this map.

The Help PF Key specifies the program function key that the operator is to hit to request tutorial information. The designer may specify two keys so that one from 1-12 and one from 13-24 can be chosen.

b. Add field

TUTORIAL FORMAT --> YES/NO (default NO)

TUTORIAL FORMAT = YES says that the map being defined is to be a tutorial page. This causes the map to be initialised to a particular form and for certain restrictions to be imposed.

Generalisation:

FORMAT --> ...... (USER, TUTORIAL, HELP. ...... default USER)

whereby the value of FORMAT specifies one of several known formats (some of which imply that the page may be used a tutorial page) and corresponding restrictions and initial forms.

3. Map Editor

In general, for tutorial pages, impose restrictions as required by FM tutorial processor, e.g. There must be

two variable fields: a control field (8 bytes long) and a message area (72 bytes long).

(The control field may or may not be displayed and may be an AID receiver. It is used to control movement through the tutorial.)

a. Field Definition

Add an operand to the ATTRIBUTE and EQUATE commands TUTORIAL (...). This enables a tutorial page to be associated with a field in the same way as the CURSOR (n) operand positions the cursor in a field.

b. Application structure review Add a new column TUTORIAL PAGE - into which the map definer may type the name of a map in the TUTORIAL GROUP that contains an explanation of the field named at the beginning of the row.

c. A further enhancement is to use IMD's recursive nature to provide a command that enables the map editor to invoke itself editing a referenced tutorial page. Thus the map definer may write tutorial information for a field or map at the same as he defines the map.

4. Data Set Generator

Include the TUTORIAL group name in the object form of the group. For each map include the help key and the tutorial page name. For each field include the tutorial page name.

5. Format Management (FM)

Note that the use of the tutorial facility requires EITHER the function known as Stored Logical Message (SLM) or consent from the application to destroy the screen contents and pass to it data as if the operator had hit the clear key. In the former case FM maintains a logical form of the data on the screen such that it can rebuild the exact screen contents at any time. In the latter case FM does not keep such information so that it cannot rebuild the screen content - rather the application is assumed to have such information as it needs it in case the operator hits CLEAR which is usually implemented as an operator request for the application to rebuild the screen. Therefore the latter case makes use of the application's CLEAR handling code to rebuild the screen.

Using SLM may be more expensive in resources but will give better human factors.

a. Input Prepass: If AID = map's help key then raise a flag 'enter tutorial mode'. Store the 'tutorial page' name.

b. For SLM continue normal processing to update the stored message (this enables any input typed-in before the operator decided to hit HELP to be kept so that it need not be retyped). During the mapping process if a field is encountered that contains the cursor and has a tutorial page associated then replace the stored tutorial page name with that value.

c. For non-SLM validation mapping also proceeds in order that a field associated tutorial page is discovered, but the input is not actually validated. This is because the input will not be returned to the application - it will be ignored.

d. If the 'enter tutorial mode' flag is on then save the content of the control blocks that represent the screen. Create new 'clean' control blocks and present the tutorial page of the tutorial group as if it were an application request.

e. Give the operator the direction. When input is received process it normally. The result is an 8-byte field. If it contains non-blanks, replace the tutorial page name with this value, display that page, give the direction to the operator etc. (This enables the map definer, by defining the field to be an AID receiver, with a suitable AID translation value, to define a network of tutorial pages that the operator walks through using PF Keys. Or by defining the field as an unprotected display field the tutorial definer can enable the operator to select tutorial pages by name. Or by using subfields, enable the operator to select part of the name e.g. redefine the 8-byte field as a 7-byte field and a 1-byte field. Make the latter correspond to a 1-byte unprotected display field and the former to an AID translate value of 'TUTPAGE' (say). The text of the tutorial page might say: "type 1 for ....; Type 2 for ...". (Cf.IMD). The concatenation of the fixed value and the user input provides the name of the new tutorial page TUTPAGE1 or TUTPAGE2.

To facilitate this technique, if FM cannot find a tutorial page it issues a message to the operator saying 'INVALID TUTORIAL SELECTED' while redisplaying the previous tutorial page, if any.

Note that processing the input during tutorial mode is the same as normal input processing (except that data is not returned to the application). Most normal facilities are available including the help key. That is a tutorial page may itself be defined as having a tutorial page associated with it. The tutorial processing code acts recursively so that no special processing is necessary.

f. When the operator input in tutorial mode results in a control field of all-blanks it is taken as a signal that the operator has finished in tutorial mode. The control blocks representing the screen during tutorial mode are destroyed and the saved values restored. Then FM internally simulates the receipt of a CLEAR key from the operator. In SLM, this causes FM to regenerate the screen contents (as part of the SLM implementation). In non-SLM, this causes a CLEAR AID to be returned to the application.

CLAIMS

1. A data processing system including at least one interactive display terminal having program function keys each associated with particular functions at which users enter data to be processed into field positions in maps displayed at the terminal and associated with particular application programs and in which application programs are run under the control of an operating system and is characterised in that means are provided in the operating system to allow a designer of maps for an application program to create a tutorial screen at the same time a map is defined so that when a data entry user requires help in interpreting a defined map the operating system automatically displays the tutorial screen associated with the map in response to an input from the associated program function key.

2. A data processing system as claimed in Claim 1 in which the operating system includes an interactive map definition system having a mapgroup editor, a map editor and a data set generator and in which the process of creating a tutorial screen includes adding a tutorial group field to the mapgroup editor defining the name of a mapgroup of tutorial pages.

3. A data processing system as claimed in Claim 2 in which the data set generator includes the tutorial group name in the object form of the group and for each map includes a program function key identification.

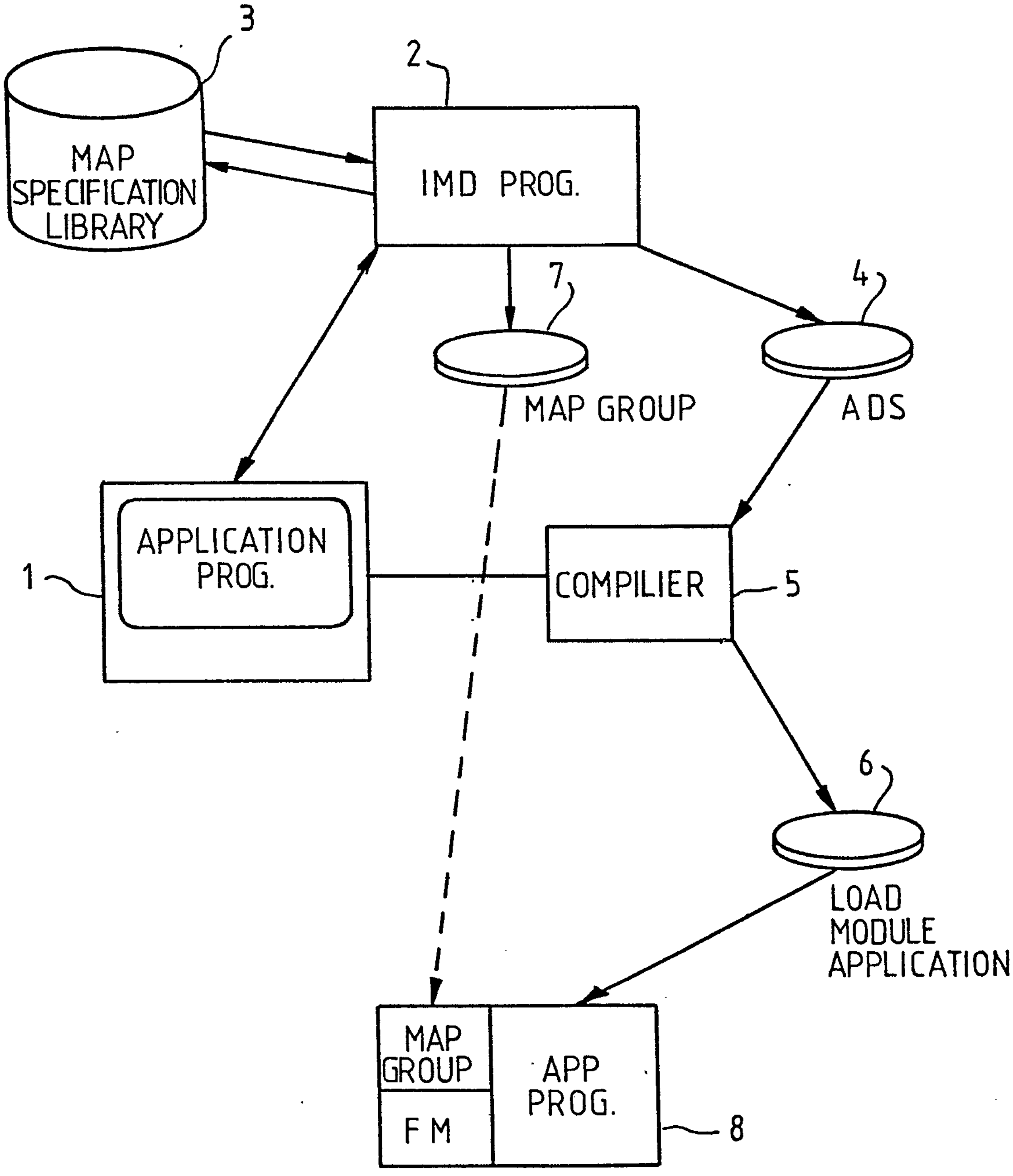
3
2
MAP
SPECIFICATION
LIBRARY
IMD PROG.
7
4
MAP GROUP
ADS
APPLICATION
PROG.
1
COMPILIER
5
6
LOAD
MODULE
APPLICATION
MAP
GROUP
FM
APP
PROG.
8

0056886

Application number

EP 81 30 0302

European Patent Office

# PARTIAL EUROPEAN SEARCH REPORT

which under Rule 45 of the European Patent Convention shall be considered, for the purposes of subsequent proceedings, as the European search report

## DOCUMENTS CONSIDERED TO BE RELEVANT

| Category | Citation of document with indication, where appropriate, of relevant passages | Relevant to claim |
|---|---|---|
| A | PROCEEDINGS OF THE FALL JOINT COMPUTER CONFERENCE; A.F.I.P.S. CONFERENCE PROCEEDINGS, vol. 37, November 17-19, 1970, MONTUALE, N.J. (US) R.L. BECKERMEYER: "Interactive graphic consoles - Environment and software", pages 315-323 * The whole article * | 1 |
| A | US - A - 3 753 233 (CARDELL) * From column 2, line 60 to column 3, line 5; from column 8, line 22 to column 9, line 15 * | 1 |
| A | ELECTRONIC PROGRESS, vol. 18, no. 2, 1976, LEXINGTON (US) A.C. BORDOGNA et al.: "The Raycomp-100, a video page composition Terminal", pages 15-22 * From page 16, right-hand column to page 17, right-hand column * | 1 |

CLASSIFICATION OF THE APPLICATION (Int. Cl.³)

G 06 F 9/44
G 06 F 3/023

TECHNICAL FIELDS SEARCHED (Int.Cl.³)

G 06 F 9/44
G 06 F 3/023

## INCOMPLETE SEARCH

The Search Division considers that the present European patent application does not comply with the provisions of the European Patent Convention to such an extent that it is not possible to carry out a meaningful search into the state of the art on the basis of some of the claims.

Claims searched completely: —

Claims searched incompletely: 1

Claims not searched: 2,3

Reason for the limitation of the search: Program for computer

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| Place of search | Date of completion of the search | Examiner |
|---|---|---|
| The Hague | 21.09.1981 | LACROIX |

EPO Form 1505.1 06.78